(19) Europäisches Patentamt

European Patent Office

Office européen des brevets

(11) Publication number: **0 042 300**
**B1**

## (12) EUROPEAN PATENT SPECIFICATION

(45) Date of publication of the patent specification:
04.04.84

(51) Int. Cl.³: **B 01 D 46/10,** B 01 D 29/20,
C 04 B 21/00

(21) Application number: 81302702.6

(22) Date of filing: 16.06.81

(54) **Ceramic honeycomb filters and the production thereof.**

(30) Priority: 16.06.80 JP 80109/80

(43) Date of publication of application:
23.12.81 Bulletin 81/51

(45) Publication of the grant of the patent:
04.04.84 Bulletin 84/14

(84) Designated Contracting States:
BE DE FR GB IT SE

(56) References cited:
DE - A - 2 248 359
DE - B - 1 097 344
FR - A - 1 515 158
US - A - 3 938 959

(73) Proprietor: NGK INSULATORS, LTD., 2-56, Suda-cho,
Mizuho-ku, Nagoya-shi, Aichi 467 (JP)

(72) Inventor: Mochida, Shigeru, 7-6-7- Iwanaridai, Kasugai
City, Aichi Prefecture (JP)
Inventor: Ogasawara, Takayuki, E-401 San Mansion
Chikuga Kohen 2-3-25 Wakamizu, Chikusa-Ku Nagoya
City (JP)

(74) Representative: Whalley, Kevin et al, Marks &
Clerk 57/60 Lincoln's Inn Fields, London WC2A 3LS (GB)

## Ceramic honeycomb filters and the production thereof

The present invention relates to a method of producing porous ceramic honeycomb filters, which are suitable for removing fine particles contained in a fluid.

Conventional filters have generally a structure such that a fluid containing fine particles is passed through a layer of a filter medium, such as steel woll, fibre or porous porcelain, the fine particles being caught by the filter medium. Filter media of fine mesh size must be used in order to improve the filtering efficiency and this results in an increased pressure drop across the filter.

The increase in pressure drop can be reduced by increasing the filter area, but a very large filter area cannot be attained by the use of a filter element having a corrugated structure, double-cymindrical form or the like, and thus the filter is comparatively large.

It is an object of the present invention to provide a method of producing porous ceramic honeycomb filters which may be provided with good heat resistance and thermal shock resistance and which may be of comparatively small size and large filter area.

The present invention provides a method of producing a porous ceramic honeycomb filter which comprises bending and bonding partition walls defining given channels at one end face of a ceramic honeycomb body having a plurality of channels extending therethrough from one end face to another end face there of to seal the channels while the honeycomb body is still plastic, bending and bonding he partition walls of the remaining channels at the other end face of the body to seal the remaining chammels, and firing the thus sealed honeycomb body.

The ceramic honeycomb body used in the present invention has a honeycomb structure having a plurality of parallel channels extending therethrough from one end face to another, and which are separated from each other by very thin partition walls.

The channels may be of any desired cross-section, for example tetragonal, hexagonal, or triangular cross-section.

Ceramic honeycomb bodies have recently been used as catalyst supports for catalysts for purifying exhaust gases in automobiles and as heat exchangers for gas turbines. In such bodies a large number of parallel channels extending through the body and having a given shape are uniformly distributed, so that the pressure resistance to gas flow is very small and the surface area per unit volume is large.

Various methods may be used to produce ceramic honeycomb bodies, for example a process wherein a paper is impregnated with a ceramic slurry, the impregnated paper is assembled into a honeycomb body and the assembled body is fired; a press process; and an extrusion process, wherein a plastic ceramic raw material is extruded through a die provided with a large number of appropriately shaped slits. In the extrusion process an organic binder and a plasticizer are added to finely powdered alumina, silica, mullite, cordierite or a fine raw material mixture having a composition which can be converted into these compounds on firing; the resulting mixture is kneaded; and the homogeneous mixture is extruded into a monolithic structure through a die provided with a large number of slits arranged so as to obtain parallel channels of the desired shape extending therethrough. The extruded article is then dried and fired to obtain a ceramic honeycomb body.

The present invention is based on the facts that a ceramic honeycomb body has a remarkably large surface area per unit volume and is a porous ceramic article, so that fluid can pass through the thin partition walls.

Suitably the sealed channels in each end face of the honeycomb body are arranged in a chequered pattern.

In the following description reference will be made to the accompanying drawings, in which:

Fig. 1 is a front view of one embodiment of a honeycomb body;

Fig. 2 ist a side view, partly in section, of honeycomb body shown in Fig. 1;

Fig. 3 is a front view of a honeycomb filter produced according to the present invention;

Fig. 4 is a side view, partly ibn section, of the honeycomb filter shown in Fig. 3, and

Fig. 5 is a schematic view to illustrate the action of a honeycomb filter produced according to the present invention.

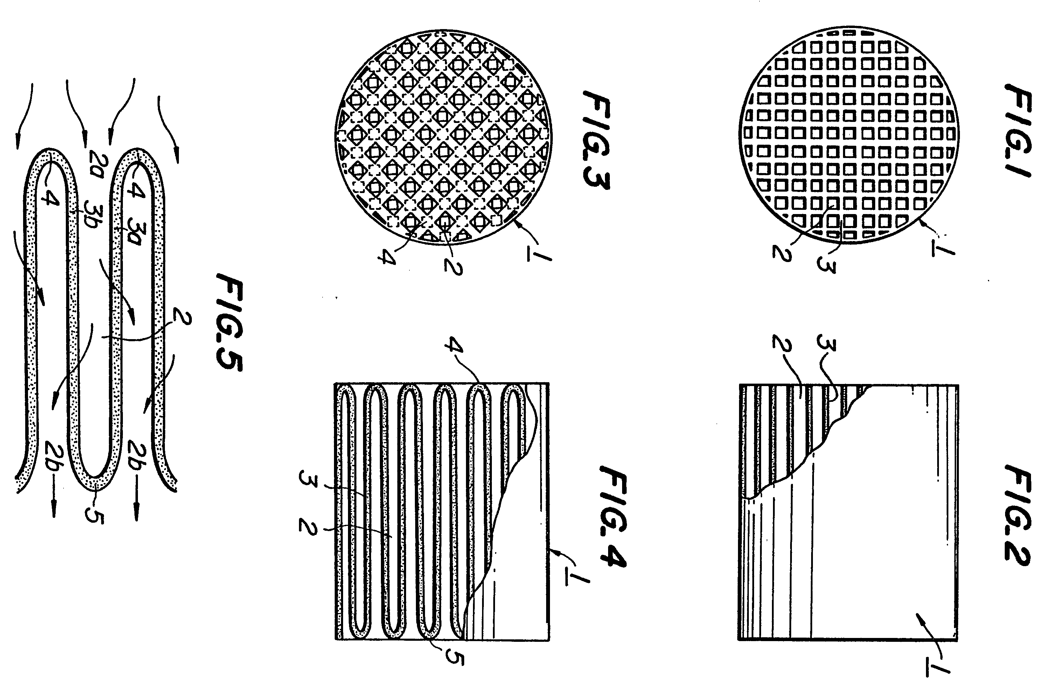

As shown in Fig. 1 and 2 one embodiment of a honeycomb body 1 has parallel channels 2 extending therethrough which channels are tetragonal in cross-section and are separated from each other by thin partition walls 3.

The honeycomb filter shown in Fig. 3 and 4 is produced from a honeycomb body as shown in Fig. 1 and 2 as follows. The thin partition walls 3 of alternate channels 2 are expanded to form sealing portions 4 and 5 at each end surface of the honeycomb body 1, whereby the channels 2 are alternately sealed so as to form a checkered pattern when the resulting honeycomb filter is viewed from one end thereof.

To form sealing portions 4 and 5 by bending the thin partition walls 2 of a honeycomb body 1 at the end faces of the body, a previously kneaded ceramic raw material is formed, suitably by extrusion, into a honeycomb body having a plurality of parallel channels 2 extending therethrough, which are separated from each other by partition walls 3 formed of porous material. Then tapered portions of a jig are inserted into alternate channels adjacent to given channels to be sealed to bend and bond the end portions of the partition walls while the extruded honeycomb structural body is still plastic, whereby the shape of the end portion og the given channels 2 shown in Fig. 1 is changed into the shape shown in Fig. 3 to form sealing portions. In this case, rod-shaped jigs are forcedly inserted into channels to expand the partition walls in all directions, whereby the partition walls are bent and bonded to form a sealing portion at the ends of the walls. When it is desired to form sealing portions arranged in a checkered pattern by sealing channels having a tetragonal cross-section, road-shaped jigs are inserted successively or concurrently into the four channels positioned adjacent to the given channels to be sealed, and the partition walls of the channels to be sealed are bent towards the center portion of the channel to be sealed. It is preferable that rodshaped jigs having a tapered tip are used and the tips are gradually inserted into the channels to gradually bend the partition walls. Further, the sealing portion can be formed in the following manners. Thus, rod-shaped jigs are arranged on the outer periphery of a disc or drum so as to be projected therefrom at a predetermined interval or pattern, and the disc or drum is rotated to continuously bend given thin partition walls; or a jig obtained by arranging rod-shaped projections on a flat borad at a predetermined interval or in a predetermined pattern is pressed on the end surface of the honeycomb body, while the body is still plastic, to form sealing portions at the same time.

The sealing portion can be also formed by the following method, wherein rod-shaped jigs are arranged on the outer side of thin partition walls of given channels to be sealed, and the rod-sphaped portions of the jigs are moved towards the centre portion of the channels to be sealed, that is a method wherein a jig having a plurality of pincettes is used, and the partition walls at the end portion of given channels to be sealed are concurrently bent towards the centre of the channels and bonded with each other at the centre of the channels by means of the tip portions of the pincettes.

In a particular method, the sealing portions in the honeycomb filter shown in Fig. 3 are formed in the following manner. Rod-sphaped projections, each having a frustum of a quadrangular pyramid, which frustum has a tetragonal cross-section and the cross-sectional area of which frustum is smaller than that of the channels at the top of the frustum, and increases gradually towards the base of the frustum, and is larger than that of the channels at the base, are inserted into alternate channels of a non-fired ceramic honeycomb body at such a position that the sides constituting the tetragonal shape are at an angle of 45° with respect to the partition walls forming the channels 2 shown in Fig. 1 to bend the partition walls forming the alternate channels from four directions to bond the thin walls with each other and to form sealing portions. The sealing portions and the opening end portions of non-sealed channels form a checker flag pattern as a whole.

The sealed honeycomb structural body, however obtained, is then fired to produce a ceramic honeycomb filter. The sealing portions are formed by firing concurrently with the firing of the honeycomb body.

Fig. 5 is a schematic view illustrating the filtering action of a ceramic honeycomb filter shown in Fig. 4. In the filter, channels 2 are arranged in a direction parallel to the direction of flow of a dust-containing fluid, and therefore the fluid flowed into the filter through an opening 2a at the one end face on the fluid inlet side passes through the porous ceramic partition walls 3a and 3b forming the channels, since the other end of the channels is sealed by the sealing portion 5, and is tranferred to the adjacent channels, which open at the fluid outlet side of the filter, and is discharged from the opening portions 2b. Thus, the thin porous partition walls 3 forming the channels 2 function as filters.

In order that the invention may be well understood the following examples are given by way of illustration only.

### Example 1

A honeycomb filter, in which both ends were sealed in a checkered pattern by bending the partition walls at the end portions of given channels as shown in Fig. 3, was produced from a cordierite honeycomb body having a diameter of 118 mm, a length of 152 mm, a partition wall thickness of 0.30 mm and about 200 channels per square inch (31 channels per square centimetre) in cross section.

Just after the extrusion of the honeycomb body, rods having a square cross-section and provided with a tapered tip were inserted into channels adjacent to be channels to be sealed to forcedly expand the partition walls, whereby the partition walls were bonded with each other the seal the end portions of the channels to be sealed. Then, the sealed honeycomb body was fired.

The resulting cordierite honeycomb filter had a porosity of 43%, an average fine pore diameter of 9 micrometres and a filter area of about 1.6 m$^2$. It had a pressure drop of 5.89 mbar (60 mm H$_2$O) when air at room temperature was passed through the filter at a rate of 2m$^3$/min.

### Example 2

A mullite honeycomb structural body having a diamter of 118 mm, a length of 152 mm, a partition wall thickness of 0.4 mm and about 100 channels per square inch (about 15.5 channels per square centimeter) in cross section was sealed in a checker flag pattern in the same manner as described in Example 1 and fired to produce a mullite honeycomb filter. The resulting filter had a porosity of 40%, an average fine pore diameter of 14 micrometres and a filter area of about 1.1 m$^2$. It had a pressure drop of 3,93 mbar

(40 mm H$_2$O) when air at room temperature was flowed through the filter at a rate of 2 m$^3$/min.

As described above, the filter produced by the present invention has a markedly large filter area per unit volume due to its honeycomb structure. Further, the filter is formed of a porous ceramic material, and therefore even fine particles contained in a high-temperature gas can be effectively trapped, for example fine paine particles contained in the exhaust gas of a diesel engine can be effectively caught. Moreover, when the porosity and diameter of fine holes of ceramic material used are changed, fine particles having various sizes can be caught.

Furthermore, in the present invention, in order to obtain a honeycomb filter having a good filtering ability, the end portions of partition walls forming given channels are bent and bonded with each other to form a sealing portion, and therefore the sealing portion consists of the same material as that of the honeycomb body and is formed at the same time with firing of the honeycomb body. Therefore, the ceramic honeycomb filter has good durability and can readily be produced.

## Claims

1. A method of producing a porous ceramic honeycomb filter, characterized in that it comprises bending and bonding partition walls (3) given channels (2) at one end face of a ceramic honeycomb body (1) having a plurality of channels (2) extending therethrough from one end face to another end face thereof to seal the channels while the honeycomb body is still plastic, bending and bonding the partition walls (3) of the remaining channels (2) at the other end face of the body to seal the remaining channels, and firing the thus sealed honeycomb body.

2. A method as claimed in Claim 1, characterized in that the channels are sealed by inserting rods having a tapered tip into channels adjacent to given channels at the end face of the honeycomb body to expand, bend and bon the partition walls defining the channels.

3. A method as claimed in Claim 1, characterized in that the channels are sealed by means of a jig provided at its peripheral surface at predetermined intervals with rod-sphaped projections having a tapered tip, which jig is rotated adjacent the end face of the body and the end portions of the channels adjacent to the given channels to be sealed are successively worked to bend and bond the partition walls to form a sealing portion.

4. A method as claimed in Claim 4, characterized in that the channels are sealed by pressing a jig having a flat plate provided at given positions with at least one rod-sphaped projection having a tapered tip, onto the end face of the ceramic honeycomb body to concurrently bend the partition walls of at least one channel.

5. A method as claimed in Claim 2, characterized in that rod-sphaped projections arranged into channels positioned surrounding the partition walls forming the given channels at the end face of the ceramic honeycomb body to bend the partition walls forming the given channels towards the interior of the given channels, whereby sealing portions are formed.

## Patentansprüche

1. Verfahren zum Herstellen eines porösen, keramischen Honigwabenfilters, gekennzeichnet durch ein Biegen und Verbinden von Trennwänden (3), welche bestimmte Kanäle (2) an einer Endfläche eines keramischen Honigwabenkörpers (1) definieren, der eine Vielzahl von Kanälen (2) umfaßt, die durch diesen von einer Endfläche zur anderen Endfläche verlaufen, um diese Kanäle abzudichten, während der Honigwabenkörper noch plastisch ist und durch Biegen und Verbinden der Trennwände (3) der verbleibenden Kanäle (2) an der anderen Endfläche des Körpers, um die verbleibenden Kanäle abzudichten, wonach der so abgedichtete Honigwabenkörper gebrannt wird.

2. Verfahren nach Anspruch 1, dadurch gekennzeichnet, daß die Kanäle dadurch abgedichtet werden, daß Stangen mit einer konisch sich verjüngenden Spitze in die Kanäle neben den vorhandenen Kanälen an der Endfläche des Honigwabenkörpers eingesetzt werden, um die die Kanäle definierenden Trennwände zu expandieren, zu bieten und zu verbinden.

3. Verfahren nach Anspruch 1, dadurch gekennzeichnet, daß die Kanäle mittels einer Aufspannvorrichtng abgedichtet werden, die an ihrer Umfangsfläche in vorbestimmten Intervallen mit stangenförmigen Vorsprüngen versehen ist, die eine konisch sich verjüngende Spitze haben, welche Aufspannvorrichtung neben der Endfläche des Körpers gedreht wird und die Endabschnitte der Kanäle neben den abzudichtenden vorhandenen Kanälen sukzessive bearbeitet werden, um die Trennwände zu biegen und zu verbinden und einen abgedichteten Abschnitt zu bilden.

4. Verfahren nach Anspruch 1, dadurch gekennzeichnet, daß die Kanäle dadurch abgedichtet werden, daß eine Aufspannvorrichtung mit einer flachen Platte, die an bestimmten Stellen mit zumindest einem stangenförmigen Vorsprung versehen ist, der eine konisch sich verjüngende Spitze aufweist, auf die Endfläche des keramischen Honigwabenkörpers gedrückt wird, um gleichzeitig wirkend die Trennwände von zumindest einem Kanal zu biegen.

5. Verfahren nach Anspruch 2, dadurch gekennzeichnet, daß die auf einer Aufspannvorrichtung angeordneten, stangenförmigen Vorsprünge in Kanäle eingeführt werden, die so positioniert sind, daß sie die Trennwände umgeben, die die bestimmten Kanäle an der einen Endfläche des kerammischen Honigwabenkörpers bilden, um die die bestimmten Kanäle bildenden Trennwände in Richtung auf das Innere der vorhandenen Trennwände zu verformen, wodurch die abdichtenden Abschnitte gebildet werden.

## Revendications

1. Procédé de production d'un filtre en matière céramique poreuse ayant une structure en forme de nid d'abbeilles, caractérisé en ce qu'il comprend une étape consistant à cintrer et à lier des cloisons (3) définissant des canaux donnés (2) sur une face d'extrémité d'un corps en matière céramique en forme de nid d'abbeilles (1) qui présente une série de canaux (2) le traversant depuis une face d'extrémité jusqu'à une autre face d'extrémité pour obturer hermétiquement les canaux pendant que le corps enforme de nid d'abeilles est encore à l'état plastique, une étape consistant à cintrer et à lier les cloisins (3) des canaux restants (2) sur l'autre face d'extrémité du corps pour obturer hermétiquement les canaux restants et une étape de cuisson du corps en forme de nid d'abeilles ainsi obturé.

2. Procédé selon la revendication 1, caractérisé en ce qu'on obture les canaux en insérant des tiges ayant une pointe conique dans des canaux adjacents aux canaux donnés sur la face d'extrémité du corps en forme des nid d'abeilles afin de dilater, de cintrer et de lier les cloisins définissant les canaux.

3. Procédé selon la revendication 1, caractérisé en ce qu'on obture les canaux au moyen d'un gabarit portant sur sa surface périphérique et à intervalles prédéterminés des saillies en forme de tiges ayant une pointe conique, gabarit que l'on fait tourner à proximité de la face d'extrémité du corps et les parties d'extrémité des canaux adjacents aux canaux donnés à obturer sont successivement travaillées pour cintrer et lier les cloisons afin de former une portion obturante.

4. Procédé selon la revendication 1, caractérisé en ce qu'on obture les canaux en pressant un gabarit ayant une plaque plane pourvue en des points donnés d'au moins une saillie en forme de tige à pointe conique, contre la face d'extrémité du corps céramique en forme de nid d'abeilles, pour cintrer simultanément les cloisons d'au moins un canal.

5. Procédé selon la revendication 2, caractérisé en ce qu'on insère des saillies en forme de tiges portées par un gabarit dans les canaux placés autour des cloisons formant les canaux donnés, sur la face d'extrémité du corps céramique en forme de nid d'abeilles pour cintrer les cloisons formant les canaux donnés vers l'intérieur des canaux donnés, de sorte qu'on forme des portions oburantes.

# FIG.1

# FIG.2

# FIG.3

# FIG.4

# FIG.5